# EUROPEAN PATENT APPLICATION

(11) **EP 0 896 025 A2**
(43) Date of publication of application: **10.02.1999**
(21) Application number: 98113562.7
(22) Date of filing: 21.07.1998
(51) Int. Cl.: C08L 23/04, C08K 3/36, C08K 5/00, C08J 7/02

(54) **Non-toxic plastic material having adsorbency and absorbency properties, and corresponding process for its manufacture**

(30) Priority: 05.08.1997 IT MI971889
(71) Applicant: Gasparini, Stefano, 23100 Sondrio (IT)
(72) Inventor: Gasparini, Stefano, 23100 Sondrio (IT)
(74) Representative: Petruzziello, Aldo

(57) **Abstract**

Non-toxic plastic material having properties of adsorbency and absorbency, made up of three interpenetrating reticular structures, and namely one polymeric reticular structure forming a support and consisting of polyolefins and their copolymers either alone or in mixtures, having a total Melt Flow Index (MFI) not lower than 0.01 g/10 minutes at 190°C in standard load conditions (2.16 kg), one solid active reticular structure, and one gaseous active reticular structure, the two latter structures being both in communication with the surface of the material, the gaseous active reticular structure being arranged around the solid active reticular structure so as to transmit, also via anisotropic distribution, specific properties throughout the material, the said gaseous active reticular structure being obtained by extraction of an interface regulator from the above-mentioned solid active reticular structure. According to the invention, the said interface regulator used to obtain the material of the invention is a substance which is totally or partially soluble in water with a solubility parameter of over 9.9 hildebrands.

The material structured in the way described above affords the advantage of enabling direct use in contact with foodstuffs and the human body, without any risks for health. The new process of production presents the advantages that it can be carried out in conditions that involve extremely low risk of fire and absolute safety as regards the risks of explosion and exposure to toxic substances, at the same time enabling the production of a material endowed with good mechanical characteristics with reduced investment and running costs as compared to the processes of the prior state of the art.

## Description

The present invention regards a plastic material modified so that, alongside properties of absorbency and adsorbency, also a non-toxic behaviour may be bestowed thereon. The invention moreover regards the process for manufacturing the said modified plastic material.

Techniques are known in which polymeric materials (both plastic and rubber) are modified by dispersing, inside the body of the said materials, aggregate matter in various states of aggregation, in particular gases and/or solids. The said materials will be referred to hereinafter as "incompatible or semi-compatible plastic systems".

Even though these structures have a very wide range of components and properties, they are generally characterized by a set of common characteristics:
- The plastic component always appears in the form of a three-dimensional reticular structure, the nature, shape and extent of which largely determine certain mechanical properties, such as tensile strength, shear strength, and rigidity. The said structure will hereinafter be referred to as "support polymeric reticular structure". This reticular structure, like all the others mentioned in what follows, is defined by the ideal possibility of transmitting some property throughout the body of which it forms part, in at least one direction, following the arrangement of the polymeric material that makes it up. For example, the support polymeric reticular structure transmits the mechanical properties throughout the body. The reticular structures referred to in what follows transmit adsorbent and absorbent capacities, favouring the circulation of liquids and gases, as will be better specified later. The frequent anisotropy of these properties in space is determined by the anisotropy of the geometrical characteristics of the said reticular structure.
- The dispersed material is partially or totally incompatible with the polymeric matrix, in the sense that it presents little or no tendency to dissolve at the molecular level in the polymeric material that makes it up, and tends therefore to disperse in the form of aggregate materials of varying dimensions according to the characteristics and relative quantities of the substances that make up the formula and according to the techniques used to bring the said components into contact with each other.

In certain particular cases (which form part of the subject of the present invention), again according to the characteristics and the relative quantities of the substances making up the formula and according to the techniques used, these aggregate materials may also form a three-dimensional reticular structure, in the sense described above, which bestows on all or on part of the material (for example, only on the surface and adjacent underlying layers) very interesting properties of transportation of matter. Independently of the chemical nature of the constituents, the said structure will hereinafter be referred to as "active reticular structure". This reticular structure occupies the spaces that are left free by the support polymeric reticular structure, so that the material may be defined as consisting of a number of interpenetrating spatial reticulated structures.

The purposes of these modifications are mainly of a technical nature, and only in some cases of an economic nature. For example, it is possible to obtain excellent behaviour in terms of impact strength, with respect to the basic polymeric materials, simply by dispersing, in the support polymeric reticular structure, particles of other polymers, such as in the case of ABS resins, polystyrene, and impact-resistant PVC (in this case the prices are much higher than those of the polymers as such). Higher properties of tensile strength and abrasion resistance are bestowed on rubbers by dispersion of carbon black and/or silica. Polypropylene, PVC and polyesters are blended at extremely high levels, 50% in certain cases, with low-cost inert powders (piping and pipe unions made of PP and PVC), or else with more structured powders, aggregate or lamellar materials, or even with glass fibre, with the aim of increasing rigidity and impact strength in the products (PP bumpers for vehicles; containers, tanks and car bodies made of reinforced polyesters). The sector of foamed materials, in which the non-polymeric component consists of gas, enables the most widely varied applications, from polystyrene foam for trays for foodstuffs (reduction in weight and hence in cost, but also increase in impact strength) and for thermal insulation (technical reasons and reasons of cost), to foamed polymers of various nature for shock-resistant packagings (technical reasons and reasons of cost) and for finishings and coatings (dashboards for motor-vehicles), up to the sophisticated and costly techniques of micro- and ultra-filtration based upon the use of open-pore polymeric structures, i.e., ones intercommunicating to form the active reticular structure. As regards coarser materials, also fibre felts and polymeric fibre-like materials fall within this class of materials, which have the capacity to enable transport of matter within them. Similar structures find application as battery separators in the cells and accumulators of many electrochemical systems, the ionic solutions of which must be able to pass through these partitions. Quite recent is the use of polymers with a high content of inorganic powders in the field of printing, on account of the high capacity of these powders to adsorb and retain the pigments and other active components of ink formulations.

Production technologies are strongly influenced by the nature of the raw materials used and by the final properties that it is aimed to achieve. Felts may be obtained by applying typical paper-making technologies, but also directly by extrusion. Mixtures of partially incompatible polymers (ABS, shock-resistant PS, etc.) are obtained both in the polymerization phase and in the phase of initial transformation into semi-finished products (granules, chips, sheets, etc.). The modifications using inert substances are generally obtained in the processing and/or transformation phase, whilst foamed and porous materials are obtained via mechanical and/or chemico-physical action on the polymeric material, either during the transformation operations or immediately afterwards on the material already shaped. The choice of the technology to a large extent determines the structural characteristics, and hence the final properties of materials. For example, it is known that the polymers modified so as to be impact-resistant acquire a higher impact resistance if the mixture is already made in the polymerization phase, as compared to those that are mixed simply in the transformation phase; the felts obtained applying paper-making technologies are oriented differently from those obtained through extrusion and moreover present a wider range of possible modifications with the introduction of additives, etc.

Finally, the very wide diffusion of plastic materials and their modifications in packagings for foodstuffs that has occurred in the last decade on account of their extreme versatility of characteristics and properties has entailed the definition of standards and regulations for the use of these materials when they come into contact with foodstuffs, and the progressive conformance with these regulations by polymers and their modifications, both as regards composition and final behaviour, and as regards technologies and auxiliary materials used during production.

FR-A-1,525,860 makes known a material with three interpenetrating reticular structures, characterized by the presence of the following: polyethylene of high molecular weight, defined by a maximum Melt Flow Index (MFI) of 0 g/10 minutes in standard conditions of load (2.16 kg) and temperature (190°C), and by an MFI at high load (21.6 kg) of 1.8 g/10 minutes max., either mixed or not with polyethylene having an MFI, in standard conditions, of higher than 0.01 g/10 minutes; an inorganic inert substance used as diluent; and a plasticizing agent which is declared to have basically the purpose of increasing the fluidity of the mixture and of favouring the dispersion of the inert material in the polyethylene. It is declared that a novelty of the invention is the fact that polyethylenes are used having standard MFIs lower than those found on the typical polyethylene market, with the purpose of preventing the poor mechanical strength that the use of inert diluents entails with current standard-MFI polyethylenes. The plasticizer is required to enable processing of the polyethylene at higher molecular weights (corresponding to lower MFI values).

The addition No. 91,754 to the above-mentioned French patent introduces the idea of production of porous materials via the use of plasticizers and/or inert materials that can be extracted with water, maintaining the other formula conditions unaltered.

GB-A-1,078,895 again takes up the formulations and ideas of the aforementioned French patent and its addition, addressing them specifically to the production of porous partitions for cells of electric storage batteries, using polyethylene or mixtures of polyethylenes, the total MFI of which, in standard conditions, must not exceed 0 g/10 minutes, and re-emphasizes that the compositions obtained with polyethylene having a standard MFI higher than 0 g/10 minutes are characterized by poor mechanical strength.

On the other hand, GB-A-1,527,385 describes the preparation of a microporous film, using polyethylenes having exclusively standard MFI higher than 0.01 g/10 minutes and plasticizers having a solubility parameter of between 8.4 and 9.9 hildebrands, preferably of between 8.6 and 9.4 hildebrands. Plasticizers with a solubility parameter lower than 8.4 hildebrands lead to products that have a very high mechanical strength but also high electrical resistance, whereas above 9.9 hildebrands the pores are very coarse and the mechanical strength is poor. The platicizers are extracted with organic solvents.

From the state of the art recalled above there thus emerges, in general, that processes are currently known that lead to the production of materials having absorbent capacities, characterized by the presence of a number of interpenetrating reticular structures, some of the said processes using raw materials and technological aids that are not dangerous for the safety of the production operations or for health in applications where they come into contact with foodstuffs of with the human body. However, the production of these materials, as described, involves complete or partial use of high and very high molecular-weight polyethylenes having MFI, in standard conditions, of 0 g/10 minutes, and MFI, in high-load conditions, of not more than 1.8 g/10 minutes, with the purpose of bestowing on the material mechanical characteristics sufficient to enable handling during production and for the application requirements.

On the other hand, the use of polyethylene with a lower molecular weight, having an MFI, in standard conditions, of not less than 0.01 g/10 minutes, which, as is known to the persons skilled in the art, involves investment and running costs considerably lower for the operations of plasticization and mixing with the other components of the mixture, is possible, according to what is declared, only by using plasticizers having a solubility parameter that falls within definite limits, with a maximum value of 9.9 hildebrands.

The main purpose of the present invention is therefore to realize a process involving lower costs, which is aimed at obtaining a material, shaped in sheets, plates or films with a smooth or ribbed surface and with desired profiles or patterns, that has good mechanical characteristics, enables absorption, adsorption and passage of substances in the fluid state, such as liquids, solutions, colloidal solutions, suspensions of liquids, liquids and gases in liquids, emulsions, gases and vapours, and can come into contact with foodstuffs or with the human body without any health hazards. The said material is characterized by the presence of three interpenetrating reticular structures, and namely one support polymeric reticular structure consisting of polyolefins and/or their copolymers, with MFI, in standard conditions, of not less than 0.01 g/10 minutes, one active reticular structure, which is solid at room temperature, consisting of inert inorganic and/or organic substances, and one gaseous active reticular structure consisting of empty spaces communicating between one another as well as with the outer surface of the product, the said gaseous reticular structure being arranged around each one of the solid particles making up the solid active reticular structure.

To achieve the above purposes, the critical step consists in obtaining a semi-finished material having a structure similar to the one of the finished material in which the gaseous reticular structure is, however, either totally or partially occupied by substances, either liquid or solid, at room temperature, which are partially or totally soluble in water and have a solubility parameter of over 9.9 hildebrands. These substances, referred to as plasticizers in the aforementioned patents, will be defined as "interface regulators" in the description of the present invention that follows. The said semi-finished material has the property of being shapeable according to all the techniques that are well known to the expert of the sector and of enabling the removal, either total or partial, of the interface regulators by means of techniques that do not involve the use of organic solvents.

A further purpose of the invention is that of providing a process for producing the material of the type referred to, which, as a result of the very nature of the substances involved, guarantees extremely low risks of fire and no risk at all of explosion or exposure to toxic substances, thus ensuring conditions of greater safety and lower investment and running costs.

These and other purposes have been achieved with the process proposed and the plastic material of the invention, as characterized, respectively, in Claims 1 and 16. Further characteristics of the invention emerge from the remaining claims.

In particular, according to the invention, it has now been discovered that, in a manner that is both new and unexpected, it is possible to produce in the ways described hereinafter, in conditions of total absence of risk of fire, explosion and exposure to toxic substances, materials characterized by the structure and by all the properties described above, including that of non-toxicity:
1) by employing formulas that include, as main components useful for the purpose:
   - polyolefins, copolymers and terpolymers of olefins and their mixtures, having MFI, in standard conditions, equal to or higher than 0.01 g/10 minutes;
   - one or more inorganic inert substances and/or one or more superabsorbent polymers; the organic inert substances are characterized by a porosity of between 10 and 85 vol% with respect to the total volume, and by grain sizes of between 1 and 50 microns; the superabsorbent polymers are characterized by the capacity to absorb between 150 and 400 ml/g of distilled water and between 20 and 80 ml/g of a 1% sodium chloride solution in water;
   - one or more hydrophilic interface regulators, with solubility parameters higher than 9.9 hildebrands;
2) by carefully mixing, in suitable conditions, the interface regulator or regulators thoroughly with the inorganic substances and/or with the superabsorbent polymers;
3) by further mixing the above-mentioned mixture with the polymer in granules or powder and the other additives envisaged by the process and by the applications, which are not essential to the implementation of the invention;
4) by working the mixture with techniques suitable for the production of the desired products, particularly by extrusion or roller-mixing to obtain sheets, with or without prior processing, to obtain granules by extrusion or to obtain homogeneous plastic masses using a Banbury mixer;
5) by further working the sheet, using a calender with either smooth rollers or rollers with surface incisions, so as to reproduce suitable patterns on the surface of the products;
6) by removing, either totally or partially, the interface regulator(s), using water and/or steam and/or a solution of the interface regulator(s) in water or employing other physical means, such as evaporation, when the characteristics of the interface regulator(s) lend themselves to the adoption of such techniques.

- To form the support polymeric reticular structure, considerations of non-toxicity, chemical stability and resistance, facility of recycling, and assurance of elimination by combustion favour the choice of polyolefins and their copolymers. The types of polyolefins that can be employed are all those on the market normally used in injection-moulding and in extrusion without the use of plastcizing means. This requirement is met by the following types of materials: PELD, PELLD, PEHD, PP and their copolymers and terpolymers known to the present state of the art (products with radical catalysts, Ziegler-Natta and metallocene catalysts, and ones obtained from ethylene, propylene, butene, vinyl acetate, and acrylic acid and its derivatives), which present a minimum MFI value of 0.01 g/10 minutes at 190°C and with a load of 2.16 kg. Lower values identify the range of high and very high molecular-weight polymers, which require, for the processes that will be indicated hereinafter, the use of organophilic plasticizers, for the recovery of which it is indispensable to employ organic solvents. The use of organic solvents, in the majority of cases, precludes the application of these materials in cases where there is contact with foodstuffs or with the human body, on account of the practical impossibility of conformance with legal requirements as regards toxic residue in the material, and thus entails compliance with costly standards regarding classification of production areas and gaseous emissions into the atmosphere and liquid emissions into the environment.

The percentage of support polymeric material in the finished product ranges from 45 to 90 vol% with respect to the total volume consisting of the support polymeric reticular structure and of the solid active reticular structure. Lower values lead to products with unsatisfactory mechanical behaviour; higher values lead to products substantially without solid active reticular structure.

The substances and/or materials that make up the solid active reticular structure may be chosen from among the following, which merely represent examples, without thereby limiting the validity of the invention:
- Inorganic materials, all of which characterized by being in an amorphous or microcrystalline form, so as to present a porosity by volume of at least 10% (measured using the mercury intrusion method, Carlo Erba Instruments, Porosimeter Model 2000), up to a maximum of 85%;
   *) Calcium carbonate, magnesium carbonate, mixed carbonates of calcium and magnesium both natural and precipitated;
   *) Silicates and silico-aluminates insoluble in water, kaolin and calcined kaolin, bentonites, natural and synthetic zeolites, mica, talcum, clays, montmorillonite, diatomaceous earth, vermiculite, precipitated and pyrogenic silica, silica gel, alumina, glass, wallastonite;
   *) Calcium sulphate, barium sulphate;
   *) Magnesium hydrate, aluminium hydrate.

The materials listed above, at the moment of use, appear as powders with grain sizes ranging between 1 and 50 microns, which may be determined using known laboratory means, such as the Coulter Counter (Coulter Electronics, Inc.). The application of energy during the processing phases reduces the size of the particles, which, in the intermediate and finished material, are distributed for the most part within the support polymeric reticular structure, so as to determine, either alone or together with particles of superabsorbent polymers, the solid active reticular structure.
- Materials of polymeric nature, characterized by a very high affinity to water, aqueous liquids and polar liquids in general. These materials are known on the market under the name of superabsorbent polymers and find application in the sector of personal hygiene, in agriculture for soil improvement, in industry as dryers of oils and petrol derivatives, etc. Among the types most widely used, which are generally reticulated on the surface of the particles or in the bulk, the following may be cited:
   *) Sodium and/or potassium salts of copolymers of acrylic and acrylamide acid, grafted on starch, or sodium and/or potassium salts of polyacrylic acid, grafted on starch, produced according to one or both of the US patents 3,661,815 and 4,159,260;
   *) Sodium and/or potassium salts of polyacrylic acid;
   *) Copolymers of 2-hydroxyethyl methacrylate and 1-vinyl-2-pyrrollidone;
   *) Non-reticulated copolymers of 1-vinyl-2-pyrrollidone and methyl methacrylate.
   These products are characterized by an absorption capacity of 150-400 ml/g of distilled water and 20-80 ml/g of 1% sodium chloride solution in water. All these polymeric substances, of a polar nature, show incompatibility in regard to polyolefins, and hence behave, during processing, like materials that tend to disperse in the support polymeric reticular structure under the form of coarse-grained aggregates, arranged so as to determine, either alone or together with inorganic materials, the solid active reticular structure.

The quantity of materials that make up the solid active reticular structure of the final product is of between 10 and 55 vol% over the total consisting of the support polymeric reticular structure and the solid active reticular structure. Higher quantities adversely affect the mechanical properties, whereas lower quantities lead to isolated structures dispersed within the support polymeric reticular structure, without the characteristic of enabling transportation of matter through the material. The relative quantities of the inorganic materials and superabsorbent polymers may range uninterruptedly from 0% to 100%.
- The interface regulators perform the function of determining the geometrical characteristics of the gaseous active reticular structure located between the surface of the solid active reticular structure and the surface of the support polymeric reticular structure. In order to be able to perform this function effectively, the substances to be used must present certain characteristics in common: marked affinity to the materials that make up the active reticular structure, prevalent incompatibility towards the polymers that make up the support polymeric reticular structure, facility of dispersion on the surface of the active reticular structure in the conditions of mixing/homogenization of the components, and good solubility in water. This latter characteristic enables use of water and/or steam and/or a solution of the interface regulator(s) in water as an agent of removal of the interface regulator, the residue of which, moreover, is allowed to come into contact with foodstuffs and the human body in almost all the cases listed below. This enables production of intrinsically non-toxic materials. In the case where the interface regulator is water, the process of removal of the regulator may be carried out, preferably, by means of evaporation. The parameter in common that identifies the characteristics referred to above is the solubility parameter, which must be higher than 9.9 hildebrands. The substances that are listed below are given only as examples, without the invention being limited to these:
   *) Water;
   *) Glycerol and its water-soluble derivatives, such as glycerol ethoxylates and propoxylates and glycerol acetic esters;
   *) Polymers soluble in water, such as polyacrylic acid and its alkaline salts, polyoxyolefin glycols and their methyl and ethyl ethers, polymethyl hydroxysiloxanes, polyvinyl alcohol, polyvinyl pyrrolidone and its copolymers, methyl cellulose, carboxymethyl cellulose, hydroxyethyl cellulose, polyoxyolefin cellulose, copolymers of maleic anhydride;
   *) Substances with surfactant behaviours, such as ionic emulsifiers, such as sulphonates and sulphates of paraffin chains, either modified or not with aromatic groups and/or with polyoxyolefin chains, ammonium salts substituted with paraffin chains and/or with polyoxyolefin chains, the polyoxyolefin esters of phosphoric acid, non-ionic emulsifiers, such as polydimethyl siloxanes, modified with polyoxyolefin chains, partial ethers of polyoxyolefin chains and of polyalcohols, such as glycols, glycerol, sorbitol, etc., partially esterified with long-chain acids, such as stearic acid, laurylic acid, etc.

The quantity present in the formula may be at the most twice by volume that of the substance or substances that make up the solid active reticular structure, and at the least one tenth by volume that of the above substance or substances. Higher values at the most lead to the formation of incoherent and brittle products, presenting irregular porosity which results in a drop in mechanical properties and characteristics of cohesion; lower values lead to products with excellent mechanical properties but without significant porosity in terms of pore volumes and rate of absorption.

The residual quantity in the product may range from 0 wt% to 5 wt%.

Listed below are other substances used, which are not essential for the implementation of the invention, in that they are well known to the experts of the sector as meeting other requirements, or else because they are introduced into the material using precisely the characteristics bestowed on the material by the invention.

Components that are well known to the current state of the art of transformation of plastic materials in relation to the type of application envisaged are:
*) Process additives, such as lubricants, anti-oxidants, stabilizers;
*) Additives that improve the behaviour of the materials in their application, such anti-UV agents, flame-resistant agents, colouring agents, optical bleaching agents, long-term stabilizing systems, etc.
The total amount of these additives does not exceed 5wt% of the finished product.
- Other components, added via an imbibition post-treatment with solutions or emulsions of substances selected for the purpose, and subsequent drying.

Obviously, aqueous solutions, emulsions and suspensions are preferred. The dissolved substances, which have the purpose of modifying the behaviour of the active reticular structure, increasing its affinity for selected liquids or conferring this affinity on supports that do not possess it, include all water-soluble substances that can be used as interface regulators, as well as emulsions and suspensions of oils and polymers in water. The content of these substances in the product does not exceed 15wt%.

When the ingredients that are to play the roles of solid active reticular structure and interface regulator, as well as the additives and components added with imbibition post-treatment, are chosen from among those allowed by international legal requirements, the premises for the production of materials allowed to come into direct contact with foodstuffs and with the human body are created.

In the preferred embodiment, the support polymeric structure consists of polyethylene and/or polypropylene; the substance that determines the solid active reticular structure is precipitated amorphous silica and/or pyrogenic silica; and the interface regulator is glycerol or its acetic esters.

In order to ensure success of production, it is essential that the interface regulator or regulators should be distributed over the surfaces of the substances that are to form the solid active reticular structure in the most homogeneous way possible. Before going on to the examples, the criterion of evaluation adopted for measuring this homogeneity is illustrated. The tests have shown that it is necessary to maintain this index at values not exceeding 1% in order to obtain materials with acceptable mechanical characteristics for the operations of handling and transportation of the product.

Among the many possible practical embodiments of this process, direct feeding into a modular double-screw extruder is the most attractive on account of the possibility of automating feed completely at levels of high precision, as well as the possibility of putting together mixing systems according to the characteristics of the substances to be mixed. The co-rotating double-screw extruders are usefully employed with substances that withstand high shear stresses without degradation, whilst with less stable substances it is possible to use contra-rotating double-screw extruders.

The loading hopper is used for introducing, under weight control, one or more solid components in the form of particles (normally the substance or substances that determine the solid active reticular structure and, when necessary, the solid interface regulator or regulators). The liquid interface regulator or regulators are introduced under the screws with suitable liquid-proportioning means (e.g., metering pumps), immediately downstream from the point in which the solids drop from the hopper.

These components then pass through a set of mixing elements that are appropriately designed to generate shear stresses which, together with electrical external resistors or other heating means housed on the casing of the extruder, combine together to raise the temperature of the interface regulator or regulators, reducing progressively their viscosity, and hence resistance to regular distribution over the surface of the substance or substances that determine the solid active reticular structure.

A subsequent feed point enables introduction of the polymer in the form of powder or granules, with suitable additives according to the recipe. Other subsequent mixing areas provide for the plasticization of the polymer and the homogeneous dispersion within it of the interface regulator(s) and or the substance or substances that determine the solid active reticular structure. This homogeneous dispersion may be directly achieved in the extruder itself with a suitable length of the mixing area, or else it is possible to obtain intermediate granules to be worked subsequently in a second extruder.

In any case a continuous sheet is obtained by means of a flat head which may be directly fed by the extruder, or else by a gear pump, normally referred to as Melt pump, set in between.

In the preferred embodiment, this sheet is directly fed through two cylinders of a calender, where it undergoes additional mixing, thanks to the formation of an accumulation in rotation between the two cylinders. The material, which is controlled thermostatically by a fluid at controlled temperature that circulates inside the two cylinders, is brought to the desired thickness and profile thanks to the relative position of the two cylinders and the type of incisions on the surface of either one cylinder or both cylinders. Well-known systems of adjustment of the opening of the lip of the head and of positioning of the cylinders automatically guarantee the best possible operation of the calender and the constancy of the geometrical characteristics of the product.

Washing of the strip at varying temperatures in a controlled manner, by means of water and/or steam and/or solution of the interface regulator or regulators in water, enables total or partial elimination of the interface regulator or regulators, which are soluble in water.

A possible similar post-treatment by means of imbibition with selected substances, using their solutions or suspensions/emulsions in water, makes it possible to introduce these substances into the strip, exploiting the characteristics that form one subject of the invention and regard the capacity of the material for allowing conveyance of matter.

A subsequent oven treatment dries out the product. The ensuing treatments of collection, handling, possible mating with other sheet materials and possible cutting into required shapes and sizes form part of technological processes well known to the experts of the sector.

The advantages of such a process are evident in terms of environmental hygiene in the factory, level of pollution in gaseous and liquid emissions, and fire and explosion hazards.

In addition, the use of water and/or steam and/or physical means (evaporation) for the total or partial removal of the interface regulator(s) and for the possible introduction of selected substances creates another important premise for allowing the finished material to come into contact with food and the human body.

European legislation, adopted by the various national legal codes (in Italy, with the Ministerial Decree No. 220 of April 26, 1993), regarding the admissibility of contact with foodstuffs, contemplates, once the requirements of the substances making up the products are met, that the products should undergo total-release tests by means of extraction in distilled water, in 3% acetic acid aqueous solution, in 15% ethyl alcohol aqueous solution, and in vegetable oil. Current legal regulations prescribe the use of the type of extracting simulant according to the class of foodstuffs that are to come into contact with the product. It is evident that the quantity and nature of the residue after the operations of extraction with water, of possible imbibition with aqueous solutions or suspensions/emulsions, and of subsequent drying-out determine the admissibility of contact with certain or with all the classes of foodstuffs contemplated by the legal regulations.

As a non-limiting example, the applications of this material may, in principle, cover highly different areas, all characterized by phenomena of transport of matter: micro- and ultra-filtration, electrophoresis, reverse osmosis, dialysis, air filtration, liquid pasteurization, regulation of concentrations of gases and vapours in controlled atmospheres, absorption of liquid contaminants, controlled release of water, specific substances and solutions, printing, battery separators for electrochemical and electrolytic cells, etc.

The examples that follow are not intended to limit in any way the scope of the invention, but are simply given for the purpose clarifying the aspects thereof. The specimens that were to undergo testing were produced with the equipment listed below and in the conditions indicated for each example:
- The mixing of all the ingredients was carried out using a discontinuous method in a Henkel fast mixer having a capacity of 15 litres and equipped with an oil-thermostatting casing. The mixer was provided with a metering micropump for feeding in the liquid components. In the tests corresponding to Examples Nos. 3, 10, 11 and 12, the fast mixer was not used.
- Extrusion was carried out in a 28-mm APV co-rotating double-screw extruder. The extruder was equipped with a gravimetric proportioner of the mixture and with a 250 mm wide flat head. For the tests corresponding to Examples Nos. 3, 11 and 12, the extruder was equipped with the metering micropump referred to in the paragraph above for the purpose of proportioning the interface regulator directly on the screws. In addition, for the tests corresponding to Examples Nos. 3, 10, 11 and 12, the profiles and length of the screws were modified with the aim of mixing the silica and the interface regulator directly in the extruder, and the extruder was provided with a gravimetric proportioner for feeding the polymer along the extrusion body.
- Calendering was carried out with a laboratory calender (width, 300 mm; diameter of cylinder, 120 mm) equipped with two smooth cylinders, without any automatic thickness control, provided with oil-thermostatting system.
- The continuous-strip product was cut into sheets and extracted in water with a specially prepared piece of equipment consisting of a container (height, 50 mm; length, 500 mm; width, 300 mm) equipped with grips for anchoring the specimen in a horizontal position, supplied with water at controlled temperature, and provided with an overflow.

The following characteristics were measured applying the methods described below:
- Homogeneity index of the mixture of the interface regulator with the substance chosen for making up the solid active reticular structure
   Ten specimens of the above mixture are taken from different points of the fast mixer or else at different extrusion times (without polymer feed) and are incinerated at 600°C. The mean (M) and standard deviation (S) of the wt% data of the residue after calcining are calculated. The homogeneity index is expressed by the percent ratio of the value 3 × S with respect to the mean value M.
- Wettable porosity, expressed as a percentage by volume.
   This is measured with the method of weighings of the dry specimen, the water-saturated specimen and the water-immersed specimen.
- Total porosity, expressed as a percentage by volume.
   This is measured with the mercury intrusion method already referred to for the measurement of the porosity of inorganic inert substances that are to define the solid active reticular structure.
- Rate of water absorption.

This is measured as the time in seconds necessary for passing from 40% to 60% of the saturation value when the specimen is set floating on the surface of the water. The curve is plotted of absorption versus time up to saturation, using not fewer than 5 specimens, and the "% saturation-time" datum is identified on the graph.
- Breaking load and extensibility in the direction of the machine and in the transverse direction, expressed in N/mm² and in percent, respectively
- Density of the material in g/ml
   This is calculated from the ratio between the weight in grams of 1 square metre of material and its thickness in microns.
- Total release
   This is calculated according to the method and simulants given in the Ministerial Decree No. 220 of April 26, 1993.

The tests referred to in the examples were for the most part carried out using amorphous silica to constitute the active solid reticular structure, polyethylene having an MFI higher than 0.01 g/10 minutes to constitute the support polymeric reticular structure, and glycerol as interface regulator, according to one of the preferred embodiments of the invention.

### Example 1

5 volumes of amorphous silica, having a total porosity of 70%, are introduced into the fast mixer at a thermostatically controlled temperature of 50°C.

7.5 volumes (at 20°C) of glycerol, preheated up to 50°C, are added to the silica, which is kept stirred at a low speed (80 r.p.m.), over a time of two minutes.

Subsequently, the following is added: 6 volumes of PEHD having an MFI of 0.7 g/10 minutes in standard conditions, to which 0,1% of 2.2'-methylene-*bis*(6-*tert*-butyl phenol) anti-oxidant, 0.1% of dilauryl thiodipropionate stabilizer, and 0.05% of carnauba wax as external lubricant have been previously added. The mixture is kept stirred for a further 30 seconds.

The mixture is fed into the extruder hopper by means of a gravimetric proportioner at a rate of 10 kg/hour, and carried to the plasticizing area by means of conveying screws having a length of 4 diameters and kept at a temperature of 130°C.

The subsequent plasticizing area extends for approximately 10 diameters and is made up of two-lobed elements progressively staggered by 25° with respect to one another, and terminates in two reverse-pitch screw elements. The temperature of this area is kept at 180°C. The screws turn at a speed of 120 r.p.m.

Through the 250-mm flat head, kept at a temperature of 180°C, the extruded material is directly fed between the cylinders of the laboratory calender, which are kept at a temperature of 140°C.

The semi-finished product, in the form of a continuous strip having a width of approximately 280 mm, is cut crosswise approximately every 300 mm. Each piece is individually extracted in the system for the times and at the temperatures indicated in TABLE 1 for this example and for all the subsequent examples.

The mixing conditions of the fast mixer and the plasticizing conditions of the extruder, as described above, correspond to the optimization of all the formula and operating parameters of Example 1. The parameters of the subsequent examples must also be considered the result of a work of optimization.

### Example 2

Same as Example 1, with the difference that the thermostatting temperature of the mixer and the preheating temperature of the glycerol are increased to 110°C, and that the time of addition of glycerol is increased to 3 minutes.

### Example 3

Same as Example 1, with the difference that the extruder is equipped for continuous mixing of the glycerol and silica, that the point of introduction of the glycerol (by means of the metering micropump) is located 2 diameters downstream from the point where the silica drops down from the hopper, that the silica and glycerol mixing area is made up of three-lobed elements, progressively staggered by 15° with respect to one another and terminating in a reverse-pitch screw element, that the latter mixing area extends for approximately 8 diameters and is kept at a temperature of 180°C, that the introduction of the PEHD and additives is carried out along the body of the extruder downstream of the mixing equipment described previously, by means of another gravimetric proportioner for feeding the polymer in at the start of the plasticizing area described in Example 1, and, finally, that the rotation of the screws is increased to 150 r.p.m.

### Example 4

Same as Example 2, with the difference that only 0.4 volumes of glycerol are used, that the temperatures of thermostatting of the mixer and of pre-heating of the glycerol are raised to 120°C, and that the phase of mixing of the silica and glycerol is prolonged by 3 minutes from the moment in which feeding-in of glycerol ceases.

### Example 5

Same as Example 2, with the difference that 11 volumes of glycerol are used and that the glycerol feeding-in time varies proportionally.

### Example 6

Same as Example 2, with the difference that 3.5 volumes of PEHD are used and that the speed of rotation of the extruder screws is increased to 200 r.p.m.

### Example 7

Same as Example 2, with the difference that 1 volume of silica, 1.5 volumes of glycerol and 10 volumes of PEHD are used, and that 50% of the two-lobed elements of the polymer plasticization area are replaced with three-lobed elements.

### Example 8

Same as Example 2, with the difference that 3 volumes of silica, 4.5 volumes of glycerol and 8 volumes of PEHD are used, the PEHD having an MFI of 5 g/10 minutes in standard conditions.

### Example 9

Same as Example 4, with the difference that the amorphous silica consists of micronized calcium carbonate with a total porosity of 25% and that 2 volumes of glycerol are used.

### Example 10

Same as Example 3, with the difference that the glycerol is replaced with 2 volumes of powdered polyvinyl alcohol, saponification No. 140, that the said PVA is fed into the hopper together with the silica, that the mixing area where the silica is mixed with the PVA is extended to 10 diameters, that the speed of rotation of the screws is increased to 180 r.p.m., and that the metering micropump is disconnected from the extruder.

### Example 11

Same as Example 10, with the difference that the polyvinyl alcohol is replaced with 1 volume of polyoxyethylene derivative of sorbitol stearate, which is fed in the liquid state into the mixing area by means of the metering micropump.

### Example 12

Same as Example 11, with the difference that, instead of the silica, partially reticulated and micronized sodium polyacrylate is used, such as the one known on the market under the Waterlock trade-mark.

### Example 13

The material produced according to Example 2, after complete extraction of the glycerol and drying in an oven, is put into contact with a 2% hydroxyethyl cellulose solution for 3 minutes, and subsequently dried.

### Example 14

The material produced according to Example 3 undergoes testing for global release according to the provisions of the Ministerial Decree No. 220 of April 26, 1993. The specimen, which consists of a sheet with flat surfaces having a thickness of 0.2 mm, yields the following results:
- Distilled water: 9.2 mg/dm²
- Acetic solution: 7.2 mg/dm²
- Alcoholic solution: 8.5 mg/dm²
- Vegetable oil: 3.5 mg/dm²
Chemical analysis of the extract in distilled water yields the following result:
- Glycerol: 4.8 mg/dm²
- Sodium sulphate: 2.1 mg/dm²
- Silicic acid: 1.9 mg/dm²

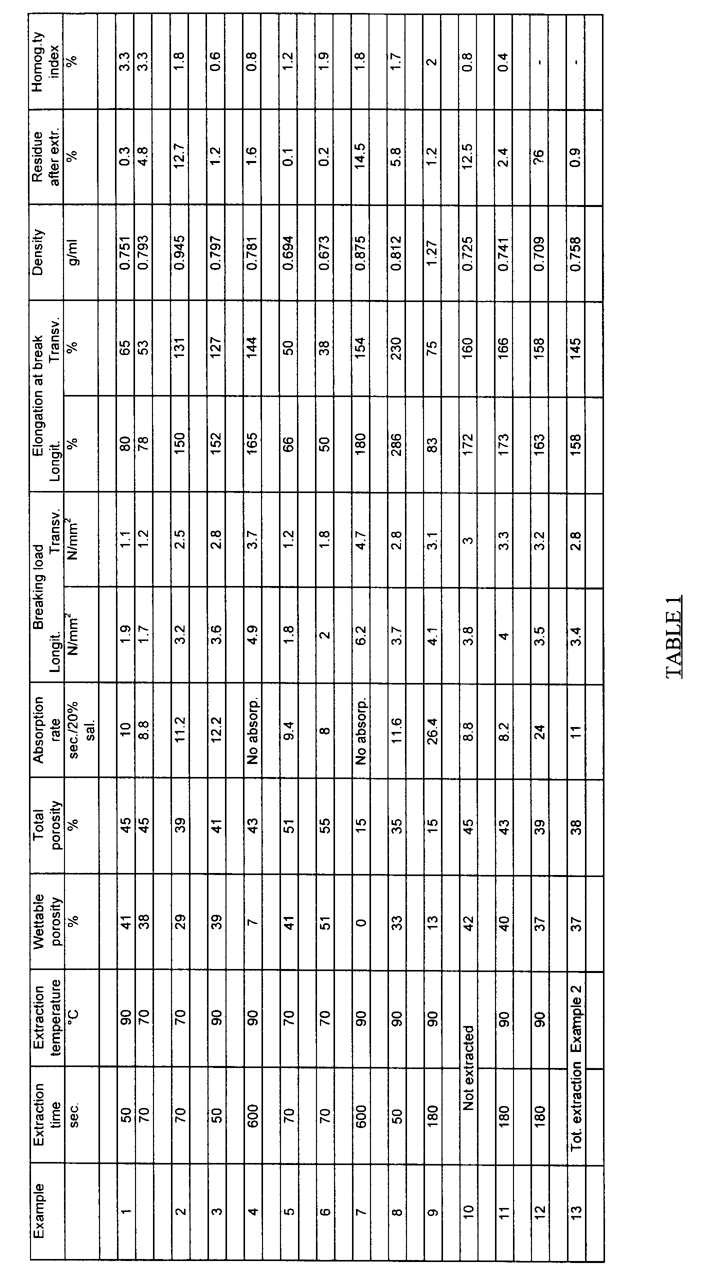

## Claims

1. Process for obtaining a material made up of three interpenetrating reticular structures, and namely one support polymeric reticular structure consisting of polyolefins and/or their copolymers having an MFI not lower than 0.01 g/10 minutes in standard conditions 190°C and 2.16 kg, one solid active reticular structure, and one gaseous active reticular structure, the two latter structures being both in communication with the surface of the material, the gaseous active reticular structure being arranged around the solid active reticular structure so as to transmit, also via anisotropic distribution, specific properties throughout the material, the said gaseous active reticular structure being obtained by extraction of an interface regulator from the above-mentioned solid active reticular structure, characterized in that the said interface regulator is a substance which is partially or totally soluble in water with a solubility parameter of over 9.9 hildebrands.

2. Process according to Claim 1, characterized in that the said interface regulator is compatible with the structures that make up the solid active reticular structure and incompatible, or only limitedly compatible, with respect to the polymers that make up the support polymeric reticular structure.

3. Process according to Claim 2, characterized in that the said interface regulator is one of the following substances, or their mixtures, which are totally or partially water-soluble: glycerol and its acetic esters, water-soluble polymers, such as polyacrylic acid and its alkaline salts, polyvinyl alcohols, cellulose esters and ethers, polyoxyethylene and polyoxypropylene glycols and ethers, polyvinyl pyrrolidone and its copolymers, copolymers of maleic anhydride, polymethylhydroxy siloxanes, and substances with surfactant behaviours of the cationic, anionic, and non-ionic types.

4. Process according to Claim 2, characterized in that the said interface regulator is water.

5. Process according to Claim 2, characterized in that the said interface regulator possesses a solubility parameter of over 9.9 hildebrands.

6. Process according to the previous claims, characterized in that the said interface regulator is a non-toxic material, preferably glycerol.

7. Process according to Claim 1, characterized in that the quantity of the said interface regulator present in the above-mentioned solid active structure ranges from 1/10 to twice the volume of the substance chosen to make up the solid active reticular structure.

8. Process according to Claim 1, in which the said interface regulator is caused to be absorbed within the pores of the substances chosen to make up the solid active reticular structure, characterized in that the percentage ratio between three times the standard deviation and the mean, as regards the results of percentage residue after incineration at 600°C of ten specimens of the mixture, does not exceed 1%.

9. Process according to Claim 8, characterized in that mixing of the said interface regulator with the said substances chosen to make up the aforementioned solid active reticular structure is carried out by feeding directly and separately the components into a double-screw extruder and by subjecting them to shear stresses generated by the particular conformation and speed of rotation of the screws, in controlled temperature conditions.

10. Process according to Claim 9, characterized in that the said polymer and other additives are fed directly into a double-screw extruder in a position downstream of the area of formation of the mixture between the interface regulator and the said substances chosen to form the solid active reticular structure, and in which plasticization of the polymer and its mixing with the other formula components is achieved by means of shear stresses generated by the particular conformation and speed of rotation of the screws, in controlled temperature conditions.

11. Process according to any one of the previous claims, characterized in that a semi-finished product is obtained, which may be shaped according to the technological processes currently used in the processing of plastic materials.

12. Process according to Claim 11, characterized in that in the semi-finished material there are present three interpenetrating structures, and namely one support polymeric reticular structure, one solid active reticular structure, and one reticular structure made up of the interface regulator, the said latter reticular structure following the course of the solid active reticular structure, within the pores of which it is absorbed.

13. Process according to any one of the previous claims, characterized in that the said interface regulator is removed either totally or partially from the semi-finished material, by means of water or of an aqueous solution of the interface regulator itself, at temperatures and stay times controlled according to the nature of the interface regulator and to the desired amount of interface regulator residue in the finished product, or else is removed by means of steam, or using purely physical systems, such as evaporation, when this is rendered convenient by the nature of the interface regulator.

14. Process according to Claim 13, characterized in that, after removal of the water via physical means, the residue of the interface regulator or of other substances introduced by means of imbibition does not exceed 15% of the total weight of the material, set in equilibrium with the environment.

15. Process according to Claim 13, characterized in that, after removal of the water via physical means, the residue of the interface regulator or of other substances introduced by means of imbibition does not exceed 0.2% of the total weight of the material, set in equilibrium with the environment.

16. Modified plastic material, of the type made up of three interpenetrating reticular structures, obtained by means of the process according to the previous claims, characterized in that it is a non-toxic, adsorbent and absorbent material, the support polymeric reticular structure of which consists of a polymer or mixtures of polymers having an MFI equal to, or higher than, 0.01 g/10 minutes in standard load conditions.

17. Material according to Claim 16, characterized in that the said support polymeric structure consists of polyolefins chosen from among homopolymers, copolymers, and terpolymers or their mixtures, obtained from ethylene, butene, vinyl acetate, and acrylic acid and its derivatives, in which the MFI index, at a temperature of 190°C and a load of 2.16 kg, is equal to, or higher than, 0.01 g/10 minutes.

18. Material according to Claim 17, characterized in that the said solid active reticular structure consists of microcrystalline amorphous inorganic materials having a porosity by volume - measured by means of mercury intrusion using the Porosimeter Model 2000 manufactured by Carlo Erba Instruments - of between 10% and 85%, and grain sizes - measured using the counter manufactured by Coulter Electronics Inc. - of between 1 and 50 microns and/or of superabsorbent polymers suitable for absorbing distilled water in the 150-400 ml/g range and a 1% sodium chloride solution in water in the 20-80 ml/g range.

19. Material according to Claim 18, characterized in that the said inorganic material consists of the following substances or their mixtures: calcium and/or magnesium carbonate (both natural and precipitated), silicates and silico-aluminates insoluble in water, calcined kaolin, bentonites, natural and synthetic zeolites, mica, talcum, clays, montmorillonite, diatomaceous earth, vermiculite, precipitated and pyrogenic silica, silica gels, alumina, glass, wallastonite, calcium sulphate, barium sulphate, magnesium hydrate, aluminium hydrate.

20. Material according to Claim 18, characterized in that the said solid active reticular structure is made up of superabsorbent polymers consisting of the following minerals or their mixtures: sodium or potassium salts of polyacrylic acid, sodium or potassium salts of acrylic acid/acrylamide copolymers, sodium or potassium salts of polyacrylic acid grafted on starch, sodium or potassium salts of acrylic/acrylamide acid copolymers grafted on starch, copolymers of 2-hydroxyethyl methacrylate/1-vinyl-2-pyrrollidone, copolymers of methyl methacrylate/1-vinyl-2-pyrrollidone.

21. Material according to Claims 19 and 20, characterized in that the said solid active reticular structure is made up of mixtures of the said inorganic material and the said superabsorbent polymers.

22. Material according to one or more of the previous claims, characterized in that the said support polymeric reticular structure constitutes 45-90 vol% with respect to the total solid reticular structures, and the solid active reticular structures constitutes 10-55 vol% with respect to the total.

23. Material according to Claim 22, in which the said polymeric reticular structure is made up of polyethylene or polypropylene or their mixtures, the solid active reticular structure is made up of precipitated amorphous silica or pyrogenic silica or their mixtures, and the interface regulator is glycerol or its acetic esters either alone or mixed together.

24. Use of the material according to any one of the foregoing claims for adsorbing, absorbing and transporting substances in the fluid state (liquids, solutions, colloidal solutions, suspensions of solids, liquids and gases in liquids, emulsions, gases and vapours), when these are put into contact with the surfaces of the material.

25. Use according to Claim 24, in which the said material is allowed to come into contact with definite families of foodstuffs, when the criteria of global release set down by European and US standards and regulations for each family of foodstuffs are met.
